(19) **Europäisches Patentamt / European Patent Office / Office européen des brevets**

(11) **EP 3 807 984 B1**

(12) **FASCICULE DE BREVET EUROPEEN**

(45) Date de publication et mention de la délivrance du brevet:
**03.08.2022 Bulletin 2022/31**

(21) Numéro de dépôt: **19726412.0**

(22) Date de dépôt: **27.05.2019**

(51) Classification Internationale des Brevets (IPC):
**H02M 1/42** *(2007.01)* **H02M 7/219** *(2006.01)*

(52) Classification Coopérative des Brevets (CPC):
**H02M 1/4208; H02M 1/4216; H02M 1/4233; H02M 7/219;** Y02B 70/10; Y02T 10/70; Y02T 10/7072; Y02T 10/72; Y02T 90/12; Y02T 90/14

(86) Numéro de dépôt international:
**PCT/EP2019/063686**

(87) Numéro de publication internationale:
**WO 2019/238404 (19.12.2019 Gazette 2019/51)**

(54) **PROCÉDÉ DE COMMANDE D'UN REDRESSEUR DE VIENNE**

VERFAHREN ZUR STEUERUNG EINES VIENNA-GLEICHRICHTERS

METHOD FOR CONTROLLING A VIENNA RECTIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2018 FR 1855285**

(43) Date de publication de la demande:
**21.04.2021 Bulletin 2021/16**

(73) Titulaires:
• **Renault s.a.s**
**92100 Boulogne Billancourt (FR)**
• **NISSAN MOTOR CO., LTD.**
**Yokohama-shi, Kanagawa 221-0023 (JP)**
Etats contractants désignés:
**AL AT BG CH CZ DE DK EE ES FI GB HR HU IS LI LU MK NO PL PT RO RS SE SK SM TR**

(72) Inventeurs:
• **KOTEICH, Mohamad**
**91440 Bures sur yvette (FR)**
• **SAKR, Nadim**
**75014 Paris (FR)**
• **ROUHANA, Najib**
**91300 Massy (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
• **MING ZHANG ET AL: "A Novel Strategy for Three-Phase/Switch/Level (Vienna) Rectifier Under Severe Unbalanced Grids", IEEE TRANSACTIONS ON INDUSTRIAL ELECTRONICS, IEEE SERVICE CENTER, PISCATAWAY, NJ, USA, vol. 60, no. 10, 1 octobre 2013 (2013-10-01), pages 4243-4252, XP011510491, ISSN: 0278-0046, DOI: 10.1109/TIE.2012.2217721**
• **LIU SENSEN ET AL: "A novel strategy for vienna-type rectifier with light unbalanced input voltage", 2013 IEEE ENERGY CONVERSION CONGRESS AND EXPOSITION, IEEE, 15 septembre 2013 (2013-09-15), pages 4253-4257, XP032516359, DOI: 10.1109/ECCE.2013.6647268**

**Description**

La présente invention concerne un procédé de commande d'un redresseur pour un dispositif de charge à entrée monophasée ou triphasée, comprenant un convertisseur AC-DC (courant alternatif-courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

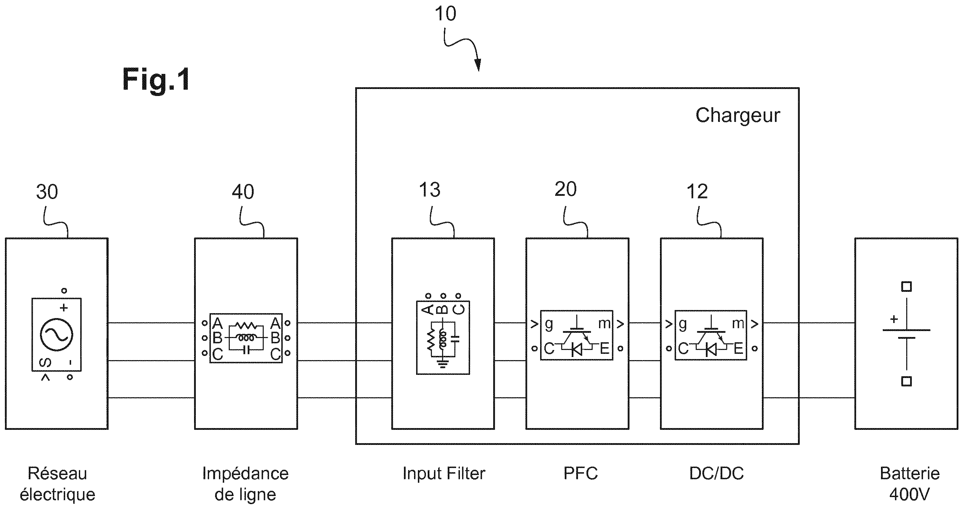

L'objet de l'invention s'applique aux dispositifs de charge monophasés et triphasés. A titre d'illustration, la figure 1 illustre une topologie connue d'un dispositif de charge 10 isolé, embarqué sur un véhicule électrique ou hybride pour la recharge de la batterie haute tension du véhicule à partir du réseau électrique triphasé 30 auquel le dispositif de charge embarqué 10 est connecté par l'intermédiaire de l'impédance de ligne 40 du réseau. Une telle topologie est adaptable pour un dispositif de charge monophasé.

Afin de mettre en œuvre la fonction de conversion AC-DC avec isolation galvanique, il est connu d'utiliser un dispositif de charge 10 comprenant un premier convertisseur AC-DC, qui comporte un circuit correcteur de facteur de puissance 20 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 20 par rapport au réseau électrique triphasé 30.

Le circuit PFC 20 est commandé par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC 20, il est connu, notamment du document d'art antérieur CN104811061, de mettre en œuvre un redresseur triphasé trois niveaux à trois interrupteurs, communément connu sous le nom de redresseur triphasé de Vienne, tel que décrit dans le document d'art antérieur EP94120245 et en figure 2.

Le choix de cette topologie est en effet particulièrement avantageux du point de vue des performances pour la correction de facteur de puissance.

Dans un redresseur triphasé de Vienne 20, chaque phase de la tension d'entrée alternative triphasée 30 est reliée par des inductances respectives La, Lb, Lc à un bras de commutation 1, 2, 3 du redresseur 20, lequel est pourvu d'une cellule d'interrupteurs de puissance respectivement Sa, Sb, Sc.

Les cellules d'interrupteurs de puissance Sa, Sb, Sc étant disposées chacune entre une inductance respective La, Lb, Lc et un point milieu O entre les deux tensions de sortie $V_{DCH}$ et $V_{DCL}$ du redresseur 20, correspondant respectivement à la tension sur un premier condensateur de sortie C1 connecté entre le point milieu O et une ligne d'alimentation positive H et à la tension sur un deuxième condensateur de sortie C2 connecté entre le point milieu O et une ligne d'alimentation négative L.

Généralement pour commander un tel redresseur de Vienne 20, on mesure les tensions et les courants en entrée de chaque interrupteur Sa, Sb, Sc ainsi qu'en sortie du redresseur et on utilise des boucles de régulation permettant de générer des rapports cycliques nécessaires pour régler le temps de conduction moyen des interrupteurs Sa, Sb, Sc.

Toutefois une problématique de ce type de structure est que lorsque les tensions mesurées sont entachées d'harmoniques ou déséquilibrées, on ne peut assurer une génération optimale des consignes de courant et la génération des consignes de puissance active est peu fiable.

Les problèmes de déséquilibres de tensions mesurées sont connus, notamment par le document CN 103187887 B, qui décrit un contrôleur pour redresseur de Vienne utilisant une consigne sinusoïdale, mais n'illustre aucune solution à ces problèmes.

Le document US 8971068 B2 décrit un moyen de supprimer les différents harmoniques, issus d'un redresseur unidirectionnel triphasé à haute tension, pour respecter ou s'approcher d'un seuil prédéterminé de la valeur absolue de la différence de phase entre la tension d'entrée du courant alternatif et du courant de phase du redresseur unidirectionnel. Toutefois, ce document US 8971068 B2 ne décrit pas de possibilité de fournir une consigne particulière de puissance active instantanée.

De manière analogue, d'autres documents connus, tels que CN 104811061 A, CN 103227575 A, et KR 101250454 B1 décrivent des redresseurs à compensation de puissance réactive, sans néanmoins divulguer des consignes de courant.

Le document EP 2 461 469 A3 propose un système capable de générer les consignes de courant continu dans un repère tournant. Toutefois, il présente l'inconvénient de recourir à une grandeur supplémentaire, comme la phase du repère tournant, pour commander un redresseur pour générer les signaux de sortie.

Aussi, l'invention vise à générer des consignes de courants permettant d'assurer une consigne de puissance active à partir de tensions d'un réseau électrique triphasé ou monophasé, de manière suffisamment fiable pour pallier les déséquilibres ou les harmoniques perturbatrices du réseau électrique.

On connaît notamment le document FR3056851 divulguant un procédé de génération de consignes de courants filtrées de manière à assurer une consigne de puissance active à partir de tensions d'un réseau électrique triphasé et visant à pallier les déséquilibres du réseau électrique.

Cependant une telle solution ne peut être appliquée sur un chargeur monophasé. En outre, elle présente un comportement peu satisfaisant au passage par zéro de la tension et ne permet pas d'estimer la fréquence et l'amplitude de la tension réseau, de sorte que la puissance et les performances du régulateur demeurent relativement peu précises.

Les documents : MING ZHANG ET AL: "A Novel Strategy for Three-Phase/Switch/Level (Vienna) Rectifier Under Severe Unbalanced Grids", IEEE TRANSACTIONS ON INDUSTRIAL ELECTRONICS, IEEE SERVICE CENTER, PISCATAWAY, NJ, USA, vol. 60, no. 10, 1 octobre 2013 (2013-10-01), pages 4243-4252, et LIU SENSEN ET AL: "A novel strategy for vienna-type rectifier with light unbalanced input voltage", 2013 IEEE ENERGY CONVERSION CONGRESS AND EXPOSITION, IEEE, 15 septembre 2013 (2013-09-15), pages 4253-4257, font partie de l'art antérieur de la présente demande.

Aussi il existe le besoin d'un procédé de génération de consignes de courants permettant de résoudre les problèmes de l'art antérieur évoqués précédemment.

On propose un procédé de génération d'une consigne de courant pour un dispositif de charge connecté à un réseau électrique, comprenant :

- une étape de mesure d'au moins une tension électrique ;
- une étape de filtrage au cours de laquelle on calcule au moins une tension filtrée en fonction de ladite au moins une tension mesurée et d'une valeur de pulsation électrique du réseau électrique ;
- une étape d'estimation d'une fréquence et de l'amplitude de ladite au moins une tension mesurée en fonction de ladite au moins une tension mesurée et de ladite au moins une tension filtrée;
- une étape de consolidation au cours de laquelle on calcule une tension consolidée en fonction de ladite au moins une tension mesurée et de ladite tension filtrée, ledit calcul fournissant une tension consolidée proche de ladite au moins une tension mesurée à faible tension, et proche de ladite au moins une tension filtrée au fur et à mesure qu'on s'éloigne de zéro; et
- une étape de génération d'une consigne de courant en fonction de ladite tension consolidée et de l'amplitude estimée.

Ainsi, on peut obtenir une commande de courant du redresseur de Vienne adaptable à la fois sur un réseau triphasé ou sur un réseau monophasé, et plus généralement sur tout réseau à N phases, pouvant en outre assurer une commande relativement correcte malgré un déséquilibre du réseau et la présence d'harmoniques, de manière relativement rapide et fiable.

En outre ce procédé permet d'assurer une commande présentant un comportement relativement optimal lors du passage des tensions à zéro.

Avantageusement et de manière non limitative, le procédé est mis en œuvre une pluralité de fois successives, et ladite valeur de pulsation électrique de l'étape de filtrage est déterminée en fonction d'une fréquence estimée lors d'une mise en œuvre précédente. Ainsi, on peut déterminer de manière relativement efficace la pulsation électrique, par la mesure précédente d'une fréquence estimée.

Avantageusement et de manière non limitative, l'étape de mesure comprend la mesure des tensions simples du réseau triphasé ; et une étape de calcul des tensions mesurées dans un repère diphasé. Ainsi, on peut simplifier la complexité et le temps de calcul nécessaire de manière relativement simple. Par exemple ce calcul dans un repère diphasé peut comprendre une transformation de Clarke ou une transformation de Concordia.

Avantageusement et de manière non limitative, le procédé comprend :

- une étape d'extraction des composantes directes des tensions filtrées ;
  ladite étape d'estimation étant en outre fonction desdites composantes directes extraites. Ainsi, on peut rendre encore plus performante et précise la commande en courant.

Avantageusement et de manière non limitative, l'étape de consolidation est en outre fonction de valeurs de seuils d'amplitude. Ainsi, on peut limiter la valeur consolidée de sorte à interdire des valeurs potentiellement erronées ou non désirées.

L'invention concerne aussi un dispositif de commande d'un dispositif de charge comprenant un convertisseur courant alternatif-courant continu connecté à un réseau électrique pour mettre en œuvre le procédé tel que décrit précédemment, qui comprend :

- des moyens de mesure d'au moins une tension du réseau électrique ;
- des moyens de filtrage pour extraire une composante fréquentielle de ladite au moins une tension mesurée en fonction d'une valeur de pulsation électrique du réseau électrique ;
- des moyens d'estimation d'une fréquence et de l'amplitude de ladite au moins une tension mesurée en fonction de la dite au moins une tension mesurée et de ladite au moins une tension filtrée ;
- des moyens de consolidation de ladite au moins une tension mesurée en fonction de ladite au moins une tension mesurée et de ladite au moins une tension filtrée, ledit calcul fournissant une tension consolidée proche de ladite au moins une tension mesurée à faible tension, et proche de ladite au moins une tension filtrée au fur et à mesure qu'on s'éloigne de zéro ; et
- des moyens de génération d'une consigne de courant en fonction de ladite tension consolidée et de l'amplitude estimée.

L'invention concerne aussi un ensemble de recharge d'une batterie d'accumulateurs électriques destiné à être connecté à un réseau électrique, comportant un circuit correcteur de facteur de puissance, un convertisseur DC-DC, une batterie d'accumulateurs électriques, et un dispositif de commande selon l'invention.

Avantageusement et de manière non limitative, le circuit correcteur de facteur de puissance comprend un redresseur de Vienne.

Avantageusement et de manière non limitative, l'ensemble de recharge est connecté à un réseau électrique triphasé ou monophasé.

L'invention concerne aussi un véhicule automobile comprenant un ensemble de recharge tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 représente un convertisseur de tension mettant en œuvre un procédé selon un mode de réalisation de l'invention représenté figure 3;
- la figure 2 représente un redresseur de Vienne triphasé connu de l'art antérieur ;
- la figure 3 représente une étape de filtrage d'une tension mesurée selon l'invention ;
- la figure 4 représente une étape d'estimation d'une fréquence et de l'amplitude de ladite tension mesurée selon l'invention ;
- la figure 5 représente une étape de consolidation selon l'invention ;
- la figure 6 représente un organigramme d'un procédé selon l'invention ; et
- la figure 7 représente un organigramme d'une procédé selon un deuxième mode de réalisation de l'invention.

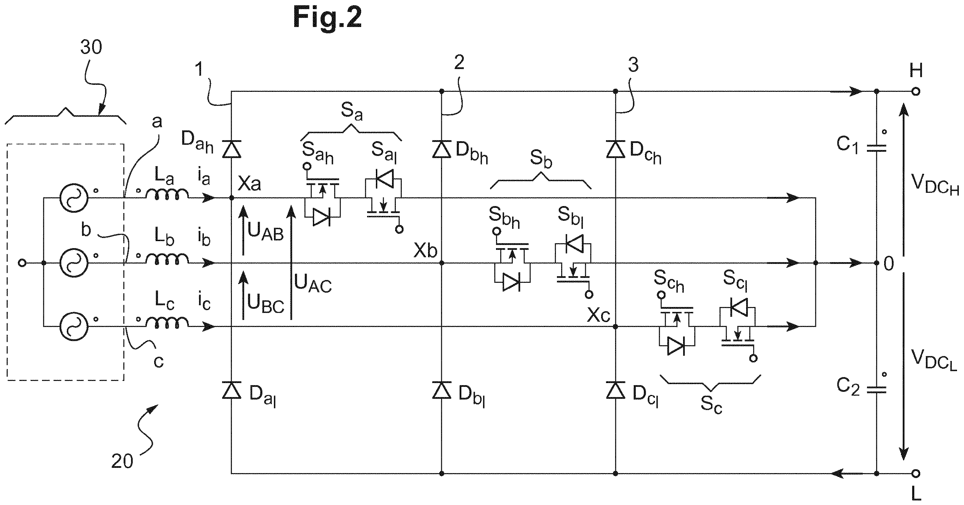

La figure 2 représente la structure d'un redresseur triphasé de Vienne 20 connu de l'art antérieur, tel qu'il est employé dans l'invention.

Le redresseur triphasé de Vienne 2 comprend trois connexions entrantes parallèles couplées chacune à une phase d'un réseau d'alimentation électrique triphasé 30 par l'intermédiaire d'une bobine d'inductance en série La, Lb, Lc, et reliée chacune à une paire d'interrupteurs Sa, Sb, Sc formant un premier un deuxième et un troisième bras de commutation du redresseur triphasé de Vienne.

Chaque paire d'interrupteurs Sa, Sb, Sc comprend un montage série en tête bêche constitué d'un premier interrupteur correspondant Sah, Sbh, Sch, qui est piloté quand un courant d'entrée correspondant $i_a$, $i_b$, $i_c$ est positif, et d'un second interrupteur correspondant Sal, Sbl, Scl qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que des transistors SiC-MOS (acronyme anglais pour Silicon Carbide-*Metal Oxide Semiconductor),* connectés en antiparallèle avec une diode. Ce type de semi-conducteurs est adapté pour des fréquences de découpage très élevées. Les interrupteurs Sah, Sbh, Sch sont également nommés interrupteurs haut et les interrupteurs Sal, Sbl, Scl, interrupteurs bas.

Le redresseur triphasé de Vienne 20 comprend aussi trois branches parallèles 1, 2 et 3, comportant chacune deux diodes Dah et Dal, Dbh et Dbl et Dch et Dcl, qui forment un pont triphasé à six diodes permettant un transfert unidirectionnel de l'énergie et de redresser le courant et la tension prélevés à partir du réseau d'alimentation électrique 30 triphasé.

Chaque entrée du redresseur triphasé de Vienne 20 est connectée, par une connexion entrante parallèle respective, à un point de connexion situé entre deux diodes d'une même branche 1, 2 et 3.

Les deux extrémités communes des branches 1, 2 et 3 constituent deux bornes de sorties H et L, respectivement positive H et négative L, du redresseur triphasé de Vienne 20, qui sont destinées à être couplées au dispositif DC-DC 12.

Les bras de commutation Sa, Sb, Sc de chaque phase sont par ailleurs connectés chacun respectivement entre le point de connexion a, b, c situé entre les deux diodes des première 1, deuxième 2 et troisième branches 3 et un point milieu O des tensions de sortie $V_{DCH}$ et $V_{DCL}$ du redresseur triphasé de Vienne 20, correspondant respectivement à la tension sur un condensateur de sortie C1 entre la borne de sortie positive H du redresseur triphasé et le point milieu O et à la tension sur un condensateur de sortie C2 entre le point milieu O et une borne de sortie négative L du redresseur triphasé 20.

La tension sur les condensateurs de sortie C1, C2 est asservie de façon indépendante par le convertisseur DC-DC du dispositif de charge connecté en sortie du redresseur triphasé de Vienne 20, selon la topologie globale illustré à la figure 1. Autrement dit, les tensions de sortie du redresseur triphasé de Vienne 20 sont commandées par le convertisseur DC-DC 12.

Le redresseur triphasé de Vienne 20 intercalé à l'entrée de l'alimentation du chargeur 10 assume le rôle de correction du facteur de puissance du chargeur. Un tel rôle permet d'empêcher les courants perturbateurs (harmoniques) produits par le chargeur, de circuler à travers l'impédance du réseau, située en amont du redresseur de Vienne 20.

Les bras de commutation Sa, Sb et Sc de chaque phase du réseau triphasé 30 sont contrôlés aux moyens de six signaux de commande PWM (d'après l'anglais « Pulse Width Modulation ») ayant un rapport cyclique variable à fréquence de découpage fixe égale à 140kHz individuellement réglé par des moyens de traitement de type FPGA par exemple (non représenté) pour des fréquences d'échantillonnage élevées.

Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur.

Les moyens de traitement mettent en œuvre un procédé de commande adapté pour commander ledit redresseur de Vienne.

Le procédé de commande selon l'invention comprend une étape de mesure 61 des tensions simples du réseau électrique, une étape de filtrage 62 de la tension mesurée, une étape d'estimation 63 de la fréquence $f_G$ et de l'amplitude $V_G$ du courant du réseau électrique, une étape de consolidation 64 de la tension mesurée, et une étape de génération 65 des consignes de courant.

Dans un premier mode de réalisation de l'invention, comprenant un dispositif de charge triphasé, on procède à la mesure des tensions simples $v_a{}^{mes}$, $v_b{}^{mes}$, $v_c{}^{mes}$ de chaque phase électrique.

Ensuite on met en œuvre une étape de filtrage 62 des tensions mesurées.

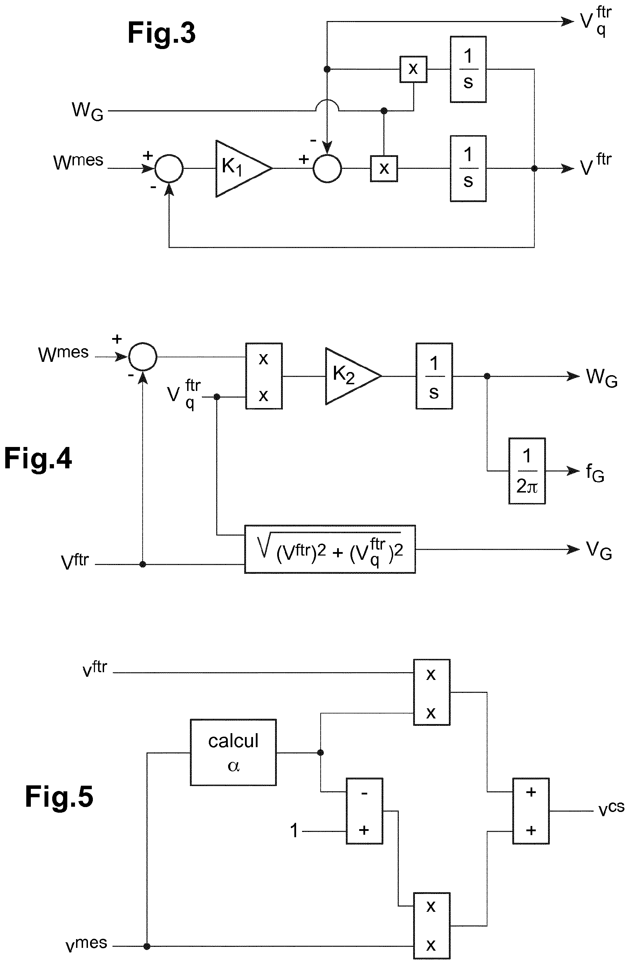

Le filtrage a pour objectif d'extraire une composante fréquentielle d'un signal bruité. On met en œuvre dans ce mode de réalisation un filtre tel que représenté figure 3, fonction des composantes des tensions mesurées transformées dans le domaine de Clarke, de la pulsation électrique de la tension réseau $\omega_G$ (correspondant à $2\pi f_G$ avec fc la fréquence de la tension du réseau) et comprenant un gain de réglage K1, deux multiplicateurs x, deux intégrateurs 1/s et deux additions, selon l'agencement logique proposé en figure 3.

Le filtre selon la figure 3 présente l'avantage d'être relativement simple à mettre en œuvre et de relativement faible complexité de calcul. Il permet un relativement bon compromis entre la rapidité et la précision de filtrage. A titre d'exemple, pour filtrer une fréquence de 50 Hz, ce filtre assure un temps de réponse inférieur à 100 ms et une très bonne précision en régime permanent.

En outre, un tel filtre permet de générer un signal en quadrature par rapport au signal d'entrée (déphasage +90°), ce qui est particulièrement adapté au procédé selon l'invention, et notamment pour la mise en œuvre des étapes telles que :

- l'estimation 63 de la fréquence et l'amplitude du signal d'entrée,
- l'estimation de la composante inverse 621 de la tension dans le cas triphasé ; et encore
- le procédé de contrôle du chargeur selon le deuxième mode de réalisation, avec un réseau monophasé.

Toutefois l'invention n'est pas limitée à ce seul filtrage, et tout autre filtrage adapté pourrait être utilisé.

Pour appliquer ce filtre sur un réseau triphasé, on mesure tout d'abord pour chaque phase la tension triphasée simple $v_a{}^{mes}$, $v_b{}^{mes}$, $v_c{}^{mes}$ ou selon une alternative on la calcule à partir de la mesure des tensions triphasées composées.

Ensuite, on calcule 611 les composantes $\alpha$ et $\beta$ de la tension, en appliquant une transformation de Clarke (triphasé-diphasé).

La transformation de Clarke permet de ramener les calculs effectués sur les tensions mesurées de trois dimensions (les tensions simples Va, Vb, Vc par exemple) à deux dimensions dans le repère $\alpha, \beta$. Par conséquent dans la suite de ce mode de réalisation, pour un réseau triphasé, toute référence notamment faite aux tensions mesurées et aux tensions filtrées doivent être comprises comme étant considérés dans le repère $\alpha, \beta$.

Le filtre est alors appliqué sur chaque composante de tension v$\alpha$, v$\beta$, pour générer les tensions filtrées $v_\alpha^{ftr}$, et $v_\beta^{ftr}$ dont on déduit leurs composantes en quadrature respectives $v_{q\alpha}^{ftr}$ et $v_{q\beta}^{ftr}$ .

Toutefois si le réseau est déséquilibré, la composante en quadrature de a n'est pas toujours alignée avec $\beta$. Ces quantités correspondent dans le cas d'un réseau équilibré. Autrement dit, la cohérence du repère $\alpha$, $\beta$ est dépendante de l'équilibre des phases mesurées, ce qui est un critère bien connu de la transformée de Clarke.

Aussi, on prend avantage de l'estimation des composantes en quadrature pour séparer le déséquilibre (composante inverse) du signal principal (composante directe).

Afin de séparer le déséquilibre du signal principal, on met en œuvre une étape d'extraction 621 de la composante directe et de la composante inverse des tensions triphasées.

En effet, il est connu qu'une tension triphasée déséquilibrée peut être vue comme la somme de 3 composantes :

- La composante directe : tension triphasée équilibrée de même séquence que la tension d'origine ;
- la composante inverse : tension triphasée équilibrée de séquence inverse par rapport à la tension d'origine ; et
- la composante homopolaire : tension triphasée équilibrée ayant les 3 composantes en phase (séquence zéro, pas de déphasage entre les 3 phases).

Les composantes $\alpha\beta$ de la composante directe des tensions filtrées sont calculées avec le système d'équations :

$$v_{\alpha p}^{ftr} = \frac{1}{2} v_\alpha^{ftr} - \frac{1}{2} v_{q\beta}^{ftr}$$

$$v_{\beta p}^{ftr} = \frac{1}{2} v_\beta^{ftr} + \frac{1}{2} v_{q\alpha}^{ftr}$$

L'indice p correspond à une composante directe (séquence positive).

Les composantes $\alpha\beta$ de la composante inverse des tensions filtrées sont calculées avec le système d'équations:

$$v_{\alpha n}^{ftr} = \frac{1}{2} v_\alpha^{ftr} + \frac{1}{2} v_{q\beta}^{ftr}$$

$$v_{\beta n}^{ftr} = \frac{1}{2} v_\beta^{ftr} - \frac{1}{2} v_{q\alpha}^{ftr}$$

L'indice *n* indique qu'il s'agit d'une composante inverse (séquence négative).

On applique ensuite la transformation de Clarke inverse pour calculer les tensions triphasées directe ( $v_{ap}^{ftr}$, $v_{bp}^{ftr}$ et $v_{cp}^{ftr}$ ) et inverse ( $v_{an}^{ftr}$, $v_{bn}^{ftr}$ et $v_{cn}^{ftr}$ ).

Le calcul de la composante homopolaire correspond au 1/3 de la somme des tensions triphasées simples.

Ensuite, on met en œuvre une étape d'estimation 63 de la fréquence f$_G$ et de l'amplitude V$_G$, en fonction des tensions mesurées dans le repère $\beta$, des tensions filtrées et des tensions en quadrature avec les tensions filtrées.

Pour calculer la fréquence, on applique l'équation suivante :

$$f_G = \frac{k_2}{2\pi} \int \left( \left( v_\beta^{mes} - v_\beta^{ftr} \right) v_{\alpha q}^{ftr} - \left( v_\alpha^{mes} - v_\alpha^{ftr} \right) v_{\beta q}^{ftr} \right) dt$$

L'amplitude V$_G$ de la composante fondamentale est égale à :

$$V_G = \sqrt{v_{\alpha p}^{ftr^2} + v_{\beta p}^{ftr^2}}$$

L'avantage par rapport aux structures classiques utilisant des boucles à verrouillage de phase (PLL) est de présenter une faible complexité de calcul.

Ensuite on met en œuvre une étape de consolidation 64 comprenant le calcul de tensions consolidées $v_{abc}^{cs}$ des tensions mesurées, tel que représenté figure 5, en fonction des tensions mesurées $v_{abc}^{mes}$ et des tensions filtrées $v_{abc}^{ftr}$ de la phase concernée.

L'objectif est de fournir des tensions consolidées $v_{abc}^{cs}$ proches des tensions mesurées $v_{abc}^{mes}$ à faible tension, ce qui assure un comportement optimisé lors du passage des tensions par zéro, et qui s'approche des tensions filtrées au fur et à mesure qu'on s'éloigne de zéro, ce qu'on obtient par l'équation

$$v_{abc}^{cs} = \alpha v_{abcp}^{ftr} + (1 - \alpha) v_{abc}^{mes}$$

avec

$$\alpha = \begin{cases} \dfrac{v_{abcp}^{ftr} - V_{th}^{min}}{V_{th}^{max} - V_{th}^{min}} & si\ V_{th}^{min} < |v_{abc}^{mes}| < V_{th}^{max} \\ 1 & si\ |v_{abc}^{mes}| \geq V_{th}^{max} \\ 0 & si\ |v_{abc}^{mes}| \leq V_{th}^{min} \end{cases}$$

Vth sont des seuils sur l'amplitude de la tension mesurée.

Vth_max est le seuil max au-delà duquel on prend la tension filtrée $v_{abc}^{ftr}$ uniquement.

Vth_min est le seuil min, au-dessous de ce seuil on prend la tension mesurée $v_{abc}^{mes}$ uniquement. Ces seuils peuvent être réglés et adaptés par l'homme du métier en fonction du dispositif de charge mis en œuvre.

Entre ces deux seuils, une combinaison linéaire des tensions filtrées et mesurées est faite de sorte à assurer la continuité du signal pour un comportement lisse.

Cette consolidation est réalisée entre chaque phase de la tension triphasée simple brute $v_a^{mes}$, $v_b^{mes}$ et $v_c^{mes}$ (mesurée ou calculée à partir de la tension composée mesurée) et sa phase correspondante dans la tension simple (composante directe), respectivement, $v_{ap}^{ftr}$, $v_{bp}^{ftr}$ et $v_{cp}^{ftr}$ calculée à partir de la tension filtrée.

Ensuite on procède à une étape de génération 65 des consignes de courants.

Pour la commande en courant, la consigne de courant $i_{abc}^{req}$ de chaque phase est calculée selon l'équation suivante :

$$i_{abc}^{req} = I_G \frac{v_{abc}^{cs}}{V_G}$$

Où $I_G$ est la valeur crête du courant de charge, calculée à partir de la puissance $P_{req}$ (puissance à transférer par la phase concernée) et de l'amplitude de la tension réseau (estimée) $V_G$, et saturée à une valeur $I_G^{max}$ :

$$I_G = sat\left(\frac{P_{req}}{V_G}, I_G^{max}\right)$$

On applique en outre une limitation de pente (en anglais *rate limiter)* sur la consigne de puissance.

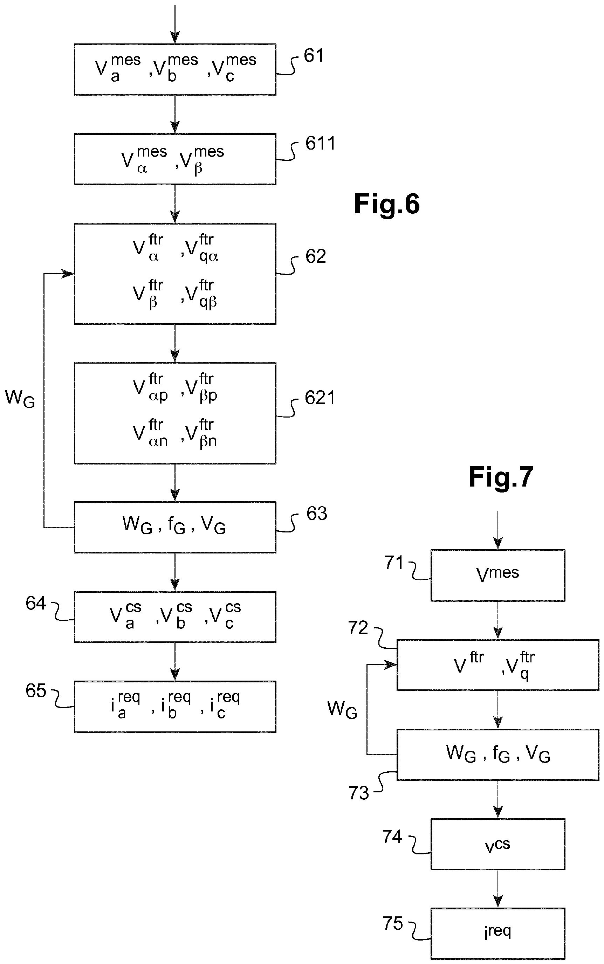

Selon un deuxième mode de réalisation de l'invention pour un dispositif de charge monophasé, le procédé selon la figure 7 comprend tout d'abord une étape de mesure 71 de la tension monophasée $V_{mes}$.

Ensuite on met en œuvre une étape de filtrage 72, selon le filtrage décrit pour le premier mode de réalisation, selon la figure 3, et pour lequel on appliquer directement la tension monophasée mesurée $V_{mes}$.

Ensuite on détermine 73, en référence à la figure 4, la fréquence et l'amplitude de la tension du réseau, en fonction de la tension mesurée V$_{mes}$ et de la tension filtrée V$_{ftr}$.

Pour calculer la fréquence fc, on applique l'équation suivante :

$$f_G = \frac{k_2}{2\pi} \int \left( (v^{mes} - v^{ftr}) v_q^{ftr} \right) dt$$

Où $k_2$ est un gain de réglage de la dynamique d'estimation de la fréquence ; la dynamique variant proportionnellement avec le gain $k_2$.

La pulsation du signal $\omega_G$ correspondant à :

$$\omega_G = 2\pi f_G$$

De plus la tension V$_G$ de la composante fondamentale de la tension est calculée par :

$$V_G = \sqrt{v^{ftr^2} + v_q^{ftr^2}}$$

La figure 4 est une représentation logique de ces calculs dans laquelle 1/s est l'intégrateur; k2 étant hors intégrateur et 1/2π étant aussi hors intégrateur pour calculer la fréquence ; et le signal à l'entrée de k2 correspondant à la multiplication des deux signaux de tension mesurés V$_{mes}$ et filtrés V$_{ftr}$.

Ensuite, on procède aux étapes de consolidation 74 et de calcul des consignes de courant de charge 75 de manière identique au premier mode de réalisation, mais en ne calculant que pour la seule phase du réseau monophasé.

Autrement dit, en monophasé, la consolidation est faite entre la tension mesurée V$_{mes}$ et la tension filtrée V$_{ftr}$.

Selon une alternative de mise en œuvre du procédé selon l'invention, que l'on peut aussi appliquer au premier et au deuxième mode de réalisation décrit ci-après, on met en œuvre une étape d'estimation des harmoniques de la tension mesurée.

Ainsi, selon cette alternative on augmente le nombre de filtres mis en œuvre pour extraire certaines harmoniques de rangs déterminés.

Ceci est possible en multipliant le nombre de filtres selon la figure 3 mis en œuvre $n$ fois ; $n$ étant le nombre d'harmonique à estimer/extraire. Chaque filtre x est alors alimenté par la tension brute mesuré $v^{mes}$, on multiplie la pulsation $\omega$ par le rang $h$ de l'harmonique à estimer/extraire ($h \times \omega$ pour extraire l'harmonique d'ordre h), et on retranche de cette tension la sortie des autres filtres employés. Autrement dit, l'entrée d'un filtre x correspond à :

$$v_x^{in} = v^{mes} - \sum_{i=1, i\neq x}^{i=n+1} v_i^{ftr}$$

Avec i = 1 correspondant à la composante fondamentale (fréquemment 50 Hz ou 60 Hz), et $v_i^{ftr}$ la sortie du filtre d'ordre i (i couvre tous les autres filtres sauf le filtre x en question), correspondant à la sortie du filtre selon la figure 3 $\omega_G$ est remplacée par $i \times \omega_G$, et en retranchant de l'entrée $v^{mes}$ les résultantes du calcul passé des toutes les harmoniques (sauf i) ;

Autrement dit, dans cette alternative de réalisation, on utilise un filtre pour la fondamentale, et h filtres similaires en parallèle. Pour ces filtres on multiplie la pulsation $\omega_G$ par le rang $h$ d'harmonique. Ainsi, l'entrée $v_x^{in}$ de chaque filtre est égale à la tension mesurée $v^{mes}$ de laquelle on retranche les résultats $v_i^{ftr}$ de l'étape de calcul précédent des autres filtres. Par exemple, pour un filtre d'une harmonique x, on retranche de la tension mesurée $v^{mes}$ les sorties $v_i^{ftr}$ calculées à l'étape précédente, avec i balayant toutes les harmoniques sauf l'harmonique x, c'est-à-dire sauf la sortie du filtre lui-même : $i = 1, i \neq x$ jusqu'à $i = h + 1$.

Dans ce cas-là, la sortie de chaque filtre correspond à l'estimation de l'harmonique du rang h, et l'estimation de la composante fondamentale est plus précise. Cette alternative de réalisation ne change pas les autres étapes des modes de réalisation décrits, que ce soit en monophasé ou en triphasé.

**Revendications**

1. Procédé de génération d'une consigne de courant pour un dispositif de charge comprenant un convertisseur courant alternatif-courant continu connecté à un réseau électrique, le procédé comprenant :

   - une étape de mesure (61, 71) d'au moins une tension ($V_{mes}$) du réseau électrique;
   - une étape de filtrage (62, 72) pour extraire une composante fréquentielle au cours de laquelle on calcule au moins une tension filtrée ($V_{ftr}$) en fonction de ladite au moins une tension mesurée ($V_{mes}$) et d'une valeur de pulsation électrique ($\omega_G$) du réseau électrique ;
   - une étape d'estimation (63, 73) d'une fréquence (fc) et de l'amplitude ($V_G$) de ladite au moins une tension mesurée en fonction de la dite au moins une tension mesurée et de ladite au moins une tension filtrée ($V_{ftr}$) ;
   - une étape de consolidation (64, 74) comportant le calcul d'une tension consolidée ($V^{cs}$) en fonction de ladite au moins une tension mesurée ($V_{mes}$) et de ladite au moins une tension filtrée ($V_{ftr}$), ledit calcul fournissant une tension consolidée qui est égale à la tension mesurée (Vmes) lorsque la tension mesurée est au-dessous d'un seuil min (Vth_min) et qui est égale à la tension filtrée (Vftr) lorsque la tension mesurée est au-delà d'un seuil max (Vth_max) et qui, entre ces deux seuils est égale à une combinaison linéaire des tensions filtrée (Vftr) et mesurée (Vmes);
   - une étape de génération (65, 75) d'une consigne de courant ($i^{req}$) en fonction de ladite tension consolidée ($V^{cs}$) et de l'amplitude estimée ($V_G$).

2. Procédé selon la revendication 1, **caractérisé en ce qu'**il est mis en œuvre une pluralité de fois successives, et que ladite valeur de pulsation électrique ($\omega_G$) de l'étape de filtrage (62, 72) est déterminée en fonction d'une fréquence estimée (fc) lors d'une mise en œuvre précédente.

3. Procédé selon la revendication 1 ou 2, pour un dispositif de charge triphasé, **caractérisé en ce que** l'étape de mesure (61) comprend la mesure des tensions simples ($v_a^{mes}$, $v_b^{mes}$, $v_c^{mes}$) du réseau triphasé ; et une étape de calcul (611) des tensions mesurées ($v_a^{mes}$, $v_b^{mes}$, $v_c^{mes}$) dans un repère diphasé ($\alpha$, $\beta$).

4. Procédé selon la revendication 3, **caractérisé en ce qu'**il comprend :

   - une étape d'extraction (621) des composantes directes $\left(v_{\alpha p}^{ftr}, v_{\beta p}^{ftr}\right)$ des tensions filtrées;

   ladite étape d'estimation (63) étant en outre fonction desdites composantes directes $\left(v_{\alpha p}^{ftr}, v_{\beta p}^{ftr}\right)$ extraites.

5. Procédé selon l'une quelconque des revendications 1 à 4, **caractérisé en ce que** l'étape de consolidation (64, 74) est en outre fonction de valeurs de seuils d'amplitude (Vth, Vth_max, Vth_min).

6. Dispositif de commande d'un dispositif de charge connecté à un réseau électrique pour mettre en œuvre le procédé selon l'une quelconque des revendications 1 à 5, **caractérisé en ce qu'**il comprend :

   - des moyens de mesure d'au moins une tension ($V_{mes}$) du réseau électrique ;
   - des moyens de filtrage de ladite au moins une tension mesurée ($V_{mes}$) en fonction d'une valeur de pulsation électrique ($\omega_G$) du réseau électrique pour extraire une composante fréquentielle ;
   - des moyens d'estimation d'une fréquence (fc) et de l'amplitude ($V_G$) de ladite au moins une tension mesurée en fonction de la dite au moins une tension mesurée et de ladite au moins une tension filtrée ($V_{ftr}$) ;
   - des moyens de consolidation de ladite au moins une tension mesurée en fonction de ladite au moins une tension mesurée ($V_{mes}$) et de ladite au moins une tension filtrée ($V_{ftr}$), aptes à fournir une tension consolidée qui est égale à la tension mesurée ($V_{mes}$) lorsque la tension mesurée est au-dessous d'un seuil min ($V_{th\_min}$) et qui est égale à la tension filtrée ($V_{ftr}$) lorsque la tension mesurée est au-delà d'un seuil max ($V_{th\_max}$) et qui, entre ces deux seuils est égale à une combinaison linéaire des tensions filtrée ($V_{ftr}$) et mesurée ($V_{mes}$); et
   - des moyens de génération (65, 75) d'une consigne de courant ($i^{req}$) en fonction de ladite tension consolidée ($V^{cs}$) et de l'amplitude estimée ($V_G$).

7. Ensemble de recharge (10) d'une batterie d'accumulateurs électriques destiné à être connecté à un réseau électrique, comportant un circuit correcteur de facteur de puissance (20), un convertisseur DC-DC (12), une batterie d'accumulateurs électriques, et un dispositif de commande selon la revendication 6.

8. Ensemble de recharge (10) selon la revendication 7, **caractérisé en ce que** le circuit correcteur de facteur de puissance comprend un redresseur de Vienne.

9. Ensemble de recharge (10) selon la revendication 7 ou 8, **caractérisé en ce qu'**il est connecté à un réseau électrique triphasé ou monophasé.

10. Véhicule automobile comprenant un ensemble de recharge selon l'une quelconque des revendications 7 à 9.

**Patentansprüche**

1. Verfahren zur Erzeugung eines Stromsollwerts für eine Ladevorrichtung, die einen Wechselstrom-Gleichstrom-Wandler enthält, der mit einem Stromnetz verbunden ist, wobei das Verfahren enthält:

  - einen Schritt (61, 71) zur Messung mindestens einer Spannung ($V_{mes}$) des Stromnetzes;
  - einen Filterschritt (62, 72) zur Entnahme einer Frequenzkomponente, während dessen mindestens eine gefilterte Spannung ($V_{ftr}$) abhängig von der mindestens einen gemessenen Spannung ($V_{mes}$) und von einem elektrischen Kreisfrequenzwert ($\omega_G$) des Stromnetzes berechnet wird;
  - einen Schritt (63, 73) zur Schätzung einer Frequenz ($f_G$) und der Amplitude ($V_G$) der mindestens einen gemessenen Spannung abhängig von der mindestens einen gemessenen Spannung und der mindestens einen gefilterten Spannung ($V_{ftr}$);
  - einen Konsolidierungsschritt (64, 74), der die Berechnung einer konsolidierten Spannung ($V^{cs}$) abhängig von der mindestens einen gemessenen Spannung ($V_{mes}$) und der mindestens einen gefilterten Spannung ($V_{ftr}$) aufweist, wobei die Berechnung eine konsolidierte Spannung liefert, die gleich der gemessenen Spannung ($V_{mes}$) ist, wenn die gemessene Spannung unter einer Schwelle min (Vth min) liegt, und die gleich der gefilterten Spannung ($V_{ftr}$) ist, wenn die gemessene Spannung über einer Schwelle max liegt, und die zwischen diesen zwei Schwellen gleich einer linearen Kombination der gefilterten ($V_{ftr}$) und gemessenen ($V_{mes}$) Spannungen ist; und
  - einen Schritt (65, 75) zur Erzeugung eines Stromsollwerts ($i^{req}$) abhängig von der konsolidierten Spannung ($V^{cs}$) und der geschätzten Amplitude ($V_G$).

2. Verfahren nach Anspruch 1, **dadurch gekennzeichnet, dass** es mehrfach nacheinander durchgeführt wird und dass der elektrische Kreisfrequenzwert ($\omega_G$) des Filterschritts (62, 72) abhängig von einer bei einer vorhergehenden Durchführung geschätzten Frequenz ($f_G$) bestimmt wird.

3. Verfahren nach Anspruch 1 oder 2, für eine dreiphasige Ladevorrichtung, **dadurch gekennzeichnet, dass** der Messschritt (61) die Messung der einfachen Spannungen ($v_a^{mes}$, $v_b^{mes}$, $v_c^{mes}$) des Dreiphasennetzes und einen Schritt der Berechnung (611) der gemessenen Spannungen ($v_a^{mes}$, $v_b^{mes}$, $v_c^{mes}$) in einem zweiphasigen Koordinatensystem ($\alpha,\beta$) enthält.

4. Verfahren nach Anspruch 3, **dadurch gekennzeichnet, dass** es enthält:

  - einen Schritt der Entnahme (621) der direkten Komponenten $(v_{\alpha p}^{ftr}, v_{\beta p}^{ftr})$ der gefilterten Spannungen;

  wobei der Schätzschritt (63) außerdem von den entnommenen direkten Komponenten $(v_{\alpha p}^{ftr}, v_{\beta p}^{ftr})$ abhängt.

5. Verfahren nach einem der Ansprüche 1 bis 4, **dadurch gekennzeichnet, dass** der Konsolidierungsschritt (64, 74) außerdem von Amplitudenschwellwerten (Vth, Vth_max, Vth_min) abhängt.

6. Vorrichtung zur Steuerung einer mit einem Stromnetz verbundenen Ladevorrichtung, um das Verfahren nach einem der Ansprüche 1 bis 5 durchzuführen, **dadurch gekennzeichnet, dass** sie enthält:

- Einrichtungen zur Messung mindestens einer Spannung ($V_{mes}$) des Stromnetzes;
- Einrichtungen zum Filtern der mindestens einen gemessenen Spannung ($V_{mes}$) abhängig von einem elektrischen Kreisfrequenzwert ($\omega_G$) des Stromnetzes, um eine Frequenzkomponente zu entnehmen;
- Einrichtungen zur Schätzung einer Frequenz ($f_G$) und der Amplitude ($V_G$) der mindestens einen gemessenen Spannung abhängig von der mindestens einen gemessenen Spannung und der mindestens einen gefilterten Spannung ($V_{ftr}$);
- Einrichtungen zur Konsolidierung der mindestens einen gemessenen Spannung abhängig von der mindestens einen gemessenen Spannung ($V_{mes}$) und der mindestens einen gefilterten Spannung ($V_{ftr}$), die eine konsolidierte Spannung liefern können, die gleich der gemessenen Spannung ($V_{mes}$) ist, wenn die gemessene Spannung unter einer Schwelle min ($V_{th\_min}$) liegt, und die gleich der gefilterten Spannung ($V_{ftr}$) ist, wenn die gemessene Spannung über einer Schwelle max ($V_{th\_max}$) liegt, und die zwischen diesen zwei Schwellen gleich einer linearen Kombination der gefilterten ($V_{ftr}$) und gemessenen ($V_{mes}$) Spannungen ist; und
- Einrichtungen zur Erzeugung (65, 75) eines Stromsollwerts ($i^{req}$) abhängig von der konsolidierten Spannung ($V^{cs}$) und der geschätzten Amplitude ($V_G$).

7. Aufladeeinheit (10) einer Akkumulatorenbatterie, die dazu bestimmt ist, mit einem Stromnetz verbunden zu werden, die eine Leistungsfaktor-Korrekturschaltung (20), einen DC-DC-Wandler (12), eine Akkumulatorenbatterie und eine Steuervorrichtung nach Anspruch 6 aufweist.

8. Aufladeeinheit (10) nach Anspruch 7, **dadurch gekennzeichnet, dass** die Leistungsfaktor-Korrekturschaltung einen Vienna-Gleichrichter enthält.

9. Aufladeeinheit (10) nach Anspruch 7 oder 8, **dadurch gekennzeichnet, dass** sie mit einem dreiphasigen oder einphasigen Stromnetz verbunden ist.

10. Kraftfahrzeug, das eine Aufladeeinheit nach einem der Ansprüche 7 bis 9 enthält.

**Claims**

1. Method for generating a current target value for a charging device comprising an AC-to-DC converter connected to an electricity grid, the method comprising:

- a step of measuring (61, 71) at least one voltage ($V_{mes}$) of the electricity grid;
- a filtering step (62, 72) for extracting a frequency component, in which at least one filtered voltage ($V_{ftr}$) is calculated on the basis of said at least one measured voltage ($V_{mes}$) and a value of the electrical angular frequency ($\omega_G$) of the electricity grid;
- a step of estimating (63, 73) a frequency ($f_G$) and the amplitude ($V_G$) of said at least one measured voltage on the basis of said at least one measured voltage and said at least one filtered voltage ($V_{ftr}$) ;
- a consolidation step (64, 74) comprising calculating a consolidated voltage ($V^{cs}$) on the basis of said at least one measured voltage ($V_{mes}$) and said at least one filtered voltage ($V_{ftr}$), said calculation providing a consolidated voltage that is equal to the measured voltage ($V_{mes}$) when the measured voltage is below a min threshold (Vth_min) and that is equal to the filtered voltage ($V_{ftr}$) when the measured voltage is beyond a max threshold (Vth max) and that, between these two thresholds, is equal to a linear combination of the filtered voltage ($V_{ftr}$) and measured voltage ($V_{mes}$); and
- a step of generating (65, 75) a current target value ($i^{req}$) on the basis of said consolidated voltage ($V^{cs}$) and the estimated amplitude ($V_G$).

2. Method according to Claim 1, **characterized in that** it is implemented several successive times, and that said value of the electrical angular frequency ($\omega_G$) of the filtering step (62, 72) is determined on the basis of a frequency ($f_G$) estimated in a previous implementation.

3. Method according to Claim 1 or 2, for a three-phase charging device, **characterized in that** the measuring step (61) comprises measuring the phase voltages ($v_a^{mes}$, $v_b^{mes}$, $v_c^{mes}$) of the three-phase grid; and a step of calculating (611) the measured voltages ($v_a^{mes}$, $v_b^{mes}$, $v_c^{mes}$) in a two-phase reference frame ($\alpha, \beta$).

4. Method according to Claim 3, **characterized in that** it comprises:

- a step of extracting (621) the forward components $(v_{\alpha p}^{ftr}, v_{\beta p}^{ftr})$ of the filtered voltages;

said estimation step (63) furthermore being based on said extracted forward components $(v_{\alpha p}^{ftr}, v_{\beta p}^{ftr})$.

5. Method according to any one of Claims 1 to 4, **characterized in that** the consolidation step (64, 74) is furthermore based on values of amplitude thresholds (Vth, Vth_max, Vth_min).

6. Device for controlling a charging device connected to an electricity grid in order to implement the method according to any one of Claims 1 to 5, **characterized in that** it comprises:

- means for measuring at least one voltage ($V_{mes}$) of the electricity grid;
- means for filtering said at least one measured voltage ($V_{mes}$) on the basis of a value of an electrical angular frequency ($\omega_G$) of the electricity grid in order to extract a frequency component;
- means for estimating a frequency ($f_G$) and the amplitude ($V_G$) of said at least one measured voltage on the basis of said at least one measured voltage and said at least one filtered voltage ($V_{ftr}$);
- means for consolidating said at least one measured voltage on the basis of said at least one measured voltage ($V_{mes}$) and said at least one filtered voltage ($V_{ftr}$), able to provide a consolidated voltage that is equal to the measured voltage ($V_{mes}$) when the measured voltage is below a min threshold (Vth_min) and that is equal to the filtered voltage ($V_{ftr}$) when the measured voltage is beyond a max threshold and that, between these two thresholds, is equal to a linear combination of the filtered voltage ($V_{ftr}$) and measured voltage ($V_{mes}$) ; and
- means for generating (65, 75) a current target value ($i^{req}$) on the basis of said consolidated voltage ($V^{cs}$) and the estimated amplitude ($V_G$).

7. Assembly (10) for recharging a battery of electrical accumulators and intended to be connected to an electricity grid, having a power factor correction circuit (20), a DC-to-DC converter (12), a battery of electrical accumulators and a control device according to Claim 6.

8. Recharging assembly (10) according to Claim 7, **characterized in that** the power factor correction circuit comprises a Vienna rectifier.

9. Recharging assembly (10) according to Claim 7 or 8, **characterized in that** it is connected to a three-phase or single-phase electricity grid.

10. Motor vehicle comprising a recharging assembly according to any one of Claims 7 to 9.

Fig.1

Fig.2

**Fig.3**

**Fig.4**

**Fig.5**

**Fig.6**

$V_a^{mes}, V_b^{mes}, V_c^{mes}$ — 61

$V_\alpha^{mes}, V_\beta^{mes}$ — 611

$V_\alpha^{ftr}, V_{q\alpha}^{ftr}$
$V_\beta^{ftr}, V_{q\beta}^{ftr}$ — 62

$V_{\alpha p}^{ftr}, V_{\beta p}^{ftr}$
$V_{\alpha n}^{ftr}, V_{\beta n}^{ftr}$ — 621

$W_G, f_G, V_G$ — 63

$W_G$

64 — $V_a^{cs}, V_b^{cs}, V_c^{cs}$

65 — $i_a^{req}, i_b^{req}, i_c^{req}$

**Fig.7**

71 — $V^{mes}$

72 — $V^{ftr}, V_q^{ftr}$

$W_G$

$W_G, f_G, V_G$

73

74 — $v^{cs}$

75 — $i^{req}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 94120245 A
- CN 103187887 B
- US 8971068 B2
- CN 104811061 A
- CN 103227575 A
- KR 101250454 B1
- EP 2461469 A3
- FR 3056851

**Littérature non-brevet citée dans la description**

- A Novel Strategy for Three-Phase/Switch/Level (Vienna) Rectifier Under Severe Unbalanced Grids. **MING ZHANG et al.** IEEE TRANSACTIONS ON INDUSTRIAL ELECTRONICS, IEEE SERVICE CENTER. PISCATAWAY, 01 Octobre 2013, vol. 60, 4243-4252
- **LIU SENSEN et al.** A novel strategy for vienna-type rectifier with light unbalanced input voltage. *2013 IEEE ENERGY CONVERSION CONGRESS AND EXPOSITION, IEEE,* 15 Septembre 2013, 4253-4257